# EUROPÄISCHE PATENTANMELDUNG

(11) **EP 4 160 874 A1**
(43) Veröffentlichungstag der Anmeldung: **05.04.2023**
(21) Anmeldenummer: 21200536.7
(22) Anmeldetag: 01.10.2021
(51) Int. Cl.: H02K 3/12, H02K 15/00

(54) **VERFAHREN ZUR HERSTELLUNG EINES AKTIVTEILS FÜR EINE ROTIERENDE ELEKTRISCHE MASCHINE, AKTIVTEIL FÜR EINE ROTIERENDE ELEKTRISCHE MASCHINE UND ROTIERENDE ELEKTRISCHE MASCHINE**

(71) Anmelder: Valeo eAutomotive Germany GmbH, 91056 Erlangen (DE)
(72) Erfinder: DOTZ, Boris, 97616 Bad Neustadt a.d.Saale (DE); FINGER-ALBERT, Christian, 97616 Bad Neustadt a.d.Saale (DE); BEETZ, Sebastian, 97616 Bad Neustadt a.d.Saale (DE); FÖRSTER, David, 97616 Bad Neustadt a.d.Saale (DE)
(74) Vertreter: Valeo Powertrain Systems

(57) **Zusammenfassung**

Bereitstellen eines Kerns (2) für das Aktivteil (1) und in den Kern (2) eingesetzter Formleiter (6), wobei der Kern (2) eine Stirnseite (3), eine der Stirnseite (3) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und eine Endfläche (9) aufweist;
- Aneinanderfügen von jeweils zwei der Endflächen (9), sodass die zwei Endflächen (9) ein Paar (10) bilden, wobei ein Rand (13) der Endfläche (9) eines jeweiligen Formleiters (6) aus einem inneren Randabschnitt (14a) und einem äußeren Randabschnitt (14b) besteht, wobei der innere Randabschnitt (14a) der Endfläche (9) eines Formleiters (6) eines jeweiligen Paars (10) entlang des inneren Randabschnitts (14a) der Endfläche des anderen Formleiters des Paars (10) verläuft und zwischen den inneren Randabschnitten (14a) ein Grenzbereich (11) verläuft; und
- Verschweißen eines jeweiligen Paars (10) der Endflächen (9) mittels eines Laserstrahls, der entlang eines eine Trajektorie (15) aufweisenden Musters über eine Fläche (18) geführt wird, auf deren Rand (19) die äußeren Randabschnitte (14b) liegen und die den Grenzbereich (11) einschließt;
wobei eine Energie des Laserstrahls auf der Fläche (18) durch das Führen entlang des Musters asymmetrisch bezüglich einer entlang des Grenzbereichs (11) oder senkrecht zum Grenzbereich (11) laufenden Symmetrielinie (20) in das jeweilige Paar (10) eingetragen wird.

## Beschreibung

Die Erfindung betrifft ein Verfahren zur Herstellung eines Aktivteils für eine rotierende elektrische Maschine, umfassend folgende Schritte: Bereitstellen eines Kerns für das Aktivteil und in den Kern eingesetzter Formleiter, wobei der Kern eine Stirnseite, eine der Stirnseite gegenüberliegende weitere Stirnseite und mehrere in Umfangsrichtung angeordnete Nuten, in denen die Formleiter angeordnet sind, aufweist, wobei sich die Formleiter von der Stirnseite zur weiteren Stirnseite erstrecken und jeweils ein freies Ende aufweisen, welches an der Stirnseite herausragt und eine Endfläche aufweist; Aneinanderfügen von jeweils zwei der Endflächen, sodass die zwei Endflächen ein Paar bilden, wobei ein Rand der Endfläche eines jeweiligen Formleiters aus einem inneren Randabschnitt und einem äußeren Randabschnitt besteht, wobei der innere Randabschnitt der Endfläche eines Formleiters eines jeweiligen Paars entlang des inneren Randabschnitts der Endfläche des anderen Formleiters des Paars verläuft und zwischen den inneren Randabschnitten ein Grenzbereich verläuft; und Verschweißen eines jeweiligen Paars der Endflächen mittels eines Laserstrahls, der entlang eines eine Trajektorie aufweisenden Musters über eine Fläche geführt wird, auf deren Rand die äußeren Randabschnitte liegen und die den Grenzbereich einschließt.

Daneben betrifft die Erfindung ein Aktivteil für eine rotierende elektrische Maschine und eine rotierende elektrische Maschine.

Die WO 2019/159737 A1 offenbart in einen Kern eingesetzte Spulensegmente. Endabschnitte der Spulensegmente werden gegeneinander gefügt und Oberflächen der Endabschnitte, die eine Fläche mit einer Begrenzung bilden, mittels Laserlichts bestrahlt und verschweißt. Das Laserlicht wird über eine rechteckige Trajektorie geführt.

Beim Verschweißen von Endabschnitten von in einen Kern eingesetzten Formleitern besteht die Anforderung, eine stabile und elektrisch gut leitfähige Schweißverbindung auszubilden. Ferner soll ein möglichst geringer Energieeintrag in die Endflächen erfolgen, um bei beschichteten Formleitern ein Aufschmelzen ihrer Beschichtung zu vermeiden.

Der Erfindung liegt die Aufgabe zugrunde, eine gegenüber dem Stand der Technik verbesserte Möglichkeit zur Herstellung eines Aktivteils für eine rotierende elektrische Maschine anzugeben.

Erfindungsgemäß wird diese Aufgabe bei einem Verfahren der eingangs genannten Art dadurch gelöst, dass eine Energie des Laserstrahls auf der Fläche durch das Führen entlang des Musters asymmetrisch bezüglich einer entlang des Grenzbereichs oder senkrecht zum Grenzbereich laufenden Symmetrielinie in das jeweilige Paar eingetragen wird.

Das erfindungsgemäße Verfahren zur Herstellung eines Aktivteils für eine rotierende elektrische Maschine umfasst einen Schritt des Bereitstellens eines Kerns für das Aktivteil und von Formleitern. Die Formleiter sind in den Kern eingesetzt. Der Kern weist eine Stirnseite auf. Der Kern weist eine weitere Stirnseite auf. Die weitere Stirnseite liegt der Stirnseite gegenüber. Der Kern weist mehrere Nuten auf. Die Nuten sind in Umfangsrichtung angeordnet. In den Nuten sind die Formleiter angeordnet. Die Formleiter erstrecken sich von der Stirnseite zur weiteren Stirnseite. Die Formleiter weisen jeweils ein freies Ende auf. Das freie Ende ragt an der Stirnseite heraus. Das freie Ende weist eine Endfläche auf. Das erfindungsgemäße Verfahren umfasst ferner einen Schritt des Aneinanderfügens von jeweils zwei der Endflächen, sodass die zwei Endflächen ein Paar bilden. Ein Rand der Endfläche eines jeweiligen Formleiters besteht aus einem inneren Randabschnitt und einem äußeren Randabschnitt. Der innere Randabschnitt der Endfläche eines Formleiters eines jeweiligen Paars verläuft entlang des inneren Randabschnitts der Endfläche des anderen Formleiters des Paars. Zwischen den inneren Randabschnitten verläuft ein Grenzbereich. Das erfindungsgemäße Verfahren umfasst ferner einen Schritt des Verschweißens eines jeweiligen Paars der Endflächen mittels eines Laserstrahls. Der Laserstrahl wird entlang eines Musters über eine Fläche geführt. Das Muster weist eine Trajektorie auf. Auf einem Rand der Fläche liegen die äußeren Randabschnitte. Die Fläche schließt den Grenzbereich ein. Eine Energie des Laserstrahls wird auf der Fläche durch das Führen entlang des Musters asymmetrisch bezüglich einer Symmetrielinie eingetragen. Die Symmetrielinie läuft entlang des Grenzbereichs oder senkrecht zum Grenzbereich.

Durch die erfindungsgemäß vorgeschlagene asymmetrische Energieverteilung kann der Energieeintrag in die freien Enden der Formleiter an deren Geometrie angepasst werden, sodass sowohl Eckbereiche der Fläche als auch der Rand und die Mitte der Fläche möglichst optimal aufgeschmolzen werden können. Dadurch kann eine sorgfältige Schweißnaht, Schweißfläche bzw. Schweißperle ausgebildet werden, die das Material der Endabschnitte effizient ausnutzt.

Vorzugsweise ist der Kern aus einer Vielzahl geschichteter und/oder gegeneinander elektrisch isolierter Einzelbleche gebildet. Der Kern kann insofern auch als Blechpaket bezeichnet werden. Die Nuten können als Durchgangsöffnungen des Kerns, die sich von der Stirnseite zur weiteren Stirnseite erstrecken, ausgebildet sein.

Die Formleiter sind vorzugsweise aus Kupfer gebildet. Die Formleiter können als mehrfach gebogener Draht, der insbesondere eine U-Form oder eine V-Form aufweist, ausgebildet sein. Die Formleiter können ein dem freien Ende gegenüberliegendes weiteres freies Ende aufweisen, welches an der Stirnseite herausragt und ebenfalls eine Endfläche aufweist. Die freien Enden ragen bevorzugt aus unterschiedlichen Nuten an der Stirnseite heraus. Vorzugsweise wird oder werden durch das Verschweißen unterschiedlicher Formleiter miteinander ein oder mehrere Strompfade ausgebildet. Die Strompfade sind dazu eingerichtet, bei einer Bestromung ein magnetisches Feld zur Erzeugung einer elektromotorischen Kraft der rotierenden elektrischen Maschine zu erzeugen.

Die Formleiter können an dem oder einem jeweiligen freien Ende eine rechteckige oder abgerundet rechteckige Querschnittsfläche aufweisen. Die Querschnittsfläche kann zwei einander gegenüberliegende Langseiten und zwei einander gegenüberliegende Schmalseiten aufweisen. Vorzugsweise werden die Endflächen derart aneinandergefügt, dass jeweils eine Langseite der Formleiter des Paars einander zugewandt sind. Die Fläche kann zumindest abschnittsweise durch die Schmalseiten und/oder durch die einander nicht zugewandten Langseiten begrenzt sein. Der Grenzbereich ist typischerweise durch einen Spalt zwischen den inneren Randabschnitten oder eine Berührung der inneren Randabschnitte ausgebildet.

Die Formleiter können eine äußere elektrisch isolierende Oberflächenschicht aufweisen, welche ein elektrisch leitfähiges Material der Formleiter umgibt. Es kann vorgesehen sein, dass an dem freien Ende oder an den freien Enden das elektrisch leitfähige Material freiliegt, sodass die Oberflächenschicht durch den Laserstrahl beim Verschweißen nicht beschädigt wird.

In bevorzugter Ausgestaltung des erfindungsgemäßen Verfahrens weist das Muster ferner eine zweite Trajektorie auf. Die zuvor erwähnte Trajektorie kann insoweit auch als erste Trajektorie bezeichnet oder erachtet werden.

Die asymmetrische Energieverteilung lässt sich insbesondere dadurch realisieren, dass die zweite Trajektorie asymmetrisch bezüglich der Symmetrielinie zur ersten Trajektorie verläuft.

Es kann bei dem erfindungsgemäßen Verfahren auch vorgesehen sein, dass das Muster eine dritte Trajektorie aufweist. Um außerhalb der ersten und zweiten Trajektorie liegende Bereiche der Fläche adäquat aufzuschmelzen kann vorgesehen sein, dass die dritte Trajektorie die erste und zweite Trajektorie umschließt. Alternativ kann die dritte Trajektorie überschneidungsfrei zwischen der ersten und der zweiten Trajektorie verlaufen. In diesem Fall kann eine gedachte Verbindunglinie, welche die erste Trajektorie und die zweite Trajektorie verbindet, kann die dritte Trajektorie einmal oder zweimal schneiden.

Die dritte Trajektorie kann einen Anfangspunkt und einen Endpunkt aufweisen und insbesondere gerade zwischen dem Anfangspunkt und dem Endpunkt verlaufen. Es ist aber auch möglich, dass die dritte Trajektorie eine geschlossene Trajektorie ist.

Die erste Trajektorie kann geschlossen verlaufen. Die erste Trajektorie verläuft insbesondere kreisförmig, oval oder rechteckig. Alternativ oder zusätzlich kann die zweite Trajektorie geschlossen verlaufen. Die zweite Trajektorie kann dann kreisförmig, oval oder rechteckig verlaufen.

Geschlossene Trajektorien können einen Anfangspunkt und einen Endpunkt aufweisen. Der Anfangspunkt und der Endpunkt können identisch sein. Es ist auch möglich, dass der Anfangspunkt und der Endpunkt unterschiedlich sind und sich die Trajektorie abschnittsweise überlappt.

Es ist möglich, dass die erste Trajektorie und die zweite Trajektorie auf unterschiedlichen Seiten der Symmetrielinie verlaufen. So kann der Energieeintrag auf beiden Seiten der Symmetrielinie verteilt werden. Besonders bevorzugt verlaufen die erste Trajektorie und die zweite Trajektorie zusätzlich auf unterschiedlichen Seiten einer die Symmetrielinie senkrecht, insbesondere mittig, teilenden Linie. Dadurch können die erste und zweite Trajektorie zwei diagonal gegenüberliegende Eckbereiche effektiv abdecken. Mit anderen Worten können die erste und zweite Trajektorie in diagonal gegenüberliegenden Quadranten der Fläche verlaufen.

Gemäß einer besonderen Ausgestaltung kann vorgesehen sein, dass die zweite Trajektorie geschlossen über beiden Seiten der Symmetrielinie und die erste Trajektorie, insbesondere diagonal, innerhalb der zweiten Trajektorie verläuft und die Symmetrielinie schneidet. Die erste Trajektorie kann dann entweder - wie zuvor beschrieben - geschlossen verlaufen oder einen Anfangspunkt und einen Endpunkt aufweisen und insbesondere gerade zwischen dem Anfangspunkt und dem Endpunkt verlaufen.

Alternativ zur Verwendung geschlossener Trajektorien kann vorgesehen sein, dass die erste und die zweite Trajektorie jeweils einen Anfangspunkt und einen davon unterschiedlichen Endpunkt aufweisen.

Dabei können die erste und zweite Trajektorie jeweils eine gewölbte Kurve, insbesondere einen Kreisbogen, einen Ellipsenbogen, eine Parabel oder eine Hyperbel, auf der Fläche beschreiben. Alternativ können die erste und zweite Trajektorie jeweils einen ersten bis dritten geraden Abschnitt aufweisen oder daraus bestehen, wobei sich der erste gerade Abschnitt vom Anfangspunkt aus erstreckt, sich der dritte gerade Abschnitt zum Endpunkt hin erstreckt und der zweite gerade Abschnitt den ersten geraden Abschnitt mit dem zweiten geraden Abschnitt verbindet. Der zweite gerade Abschnitt kann mit dem ersten geraden Abschnitt und dem dritten geraden Abschnitt jeweils einen rechten Winkel einschließen. Es ist auch möglich, dass der zweite gerade Abschnitt kann mit dem ersten geraden Abschnitt und dem dritten geraden Abschnitt jeweils einen Winkel von mehr als 90°, beispielsweise wenigstens 100°, bevorzugt wenigstens 120°, besonderes bevorzugt wenigstens 130°, einschließt.

In Weiterbildung kann vorgesehen sein, dass die erste und die zweite Trajektorie spiegelsymmetrisch bezüglich einer gegenüber der Symmetrielinie parallelverschobenen Linie verlaufen.

Alternativ oder zusätzlich zu einem asymmetrischen Verlauf der Trajektorien kann vorgesehen sein, dass die Energieintensität des Laserstrahls entlang der ersten Trajektorie größer oder kleiner als entlang der zweiten Trajektorie ist.

Gemäß einer weiteren Ausgestaltung kann bei dem erfindungsgemäßen Verfahren vorgesehen sein, dass die Trajektorie einen Anfangspunkt und einen davon unterschiedlichen Endpunkt aufweist und die Symmetrielinie zwischen dem Anfangspunkt und dem Endpunkt wenigstens zweimal, bevorzugt wenigstens viermal, schneidet. Der Verlauf der Trajektorie kann insbesondere mäanderförmig sein. In Weiterbildung kann die zweite Trajektorie einen Anfangspunkt und einen davon unterschiedlichen Endpunkt aufweisen und, insbesondere gerade, vollständig auf einer Seite der Symmetrielinie verlaufen. Zusätzlich kann das Muster ferner eine dritte Trajektorie aufweisen, die einen Anfangspunkt und einen davon unterschiedlichen Endpunkt aufweist und, insbesondere gerade, vollständig auf der Seite der Symmetrielinie verläuft, auf der die zweite Trajektorie nicht verläuft. Die Energieintensität des Laserstrahls entlang der zweiten und/oder dritten Trajektorie kann größer sein als entlang der ersten Trajektorie.

Beim erfindungsgemäßen Verfahren kann eine den Laserstrahl erzeugende Laservorrichtung verwendet werden, welche in einem deaktivierten Zustand, in welchem der Laserstrahl abgeschaltet ist oder eine für ein auf schmelzen eines Materials der Formleiter unzureichende Leistung aufweist, und in einem aktivierten Zustand, in welchem der Laserstrahl das Material des Formleiters aufschmelzen kann, betreibbar ist. Der Schritt des Verschweißens kann dabei für eine jeweilige Trajektorie folgende Schritte umfassen: Ausrichten der Leservorrichtung auf den Anfangspunkt der Trajektorie im deaktivierten Zustand; Führen des Laserstrahls im aktivierten Zustand der Laservorrichtung vom Anfangspunkt entlang der Trajektorie zum Endpunkt der Trajektorie; wobei die Laservorrichtung zwischen dem Ausrichten und dem Führen aus dem deaktivierten Zustand in den aktivierten Zustand überführt wird, wenn die Laservorrichtung auf den Anfangspunkt der Trajektorie ausgerichtet ist, und aus dem aktivierten Zustand in den deaktivierten Zustand überführt wird, wenn das Führen den Endpunkt der Trajektorie erreicht hat.

Bei dem Aktivteil kann es sich um einen Stator oder um einen Rotor handeln. Der Rotor ist insbesondere fremderregt. Der Rotor kann insbesondere auch permanenterregt sein.

Die der Erfindung zugrunde liegende Aufgabe wird ferner gelöst durch ein Aktivteil für eine rotierende elektrische Maschine, erhalten durch das erfindungsgemäße Verfahren und/oder umfassend: einen Kern und in den Kern eingesetzte Formleiter, wobei der Kern eine Stirnseite, eine der Stirnseite gegenüberliegende weitere Stirnseite und mehrere in Umfangsrichtung angeordnete Nuten, in denen die Formleiter angeordnet sind, aufweist, wobei sich die Formleiter von der Stirnseite zur weiteren Stirnseite erstrecken und jeweils ein freies Ende aufweisen, welches an der Stirnseite herausragt und eine Endfläche aufweist, wobei jeweils zwei der Endflächen aneinandergefügt sind, sodass die zwei Endflächen ein Paar bilden, wobei ein Rand der Endfläche eines jeweiligen Formleiters aus einem inneren Randabschnitt und einem äußeren Randabschnitt besteht, wobei der innere Randabschnitt der Endfläche eines Formleiters eines jeweiligen Paars entlang des inneren Randabschnitts der Endfläche des anderen Formleiters des Paars verläuft und zwischen den inneren Randabschnitten ein Grenzbereich verläuft, wobei ein jeweiliges Paars der Endflächen mittels eines entlang eines eine Trajektorie aufweisenden Musters über eine Fläche, auf deren Rand die äußeren Randabschnitte liegen und die den Grenzbereich einschließt, geführten Laserstrahls verschweißt ist, wobei eine Energie des Laserstrahls auf der Fläche durch das Führen entlang des Musters asymmetrisch bezüglich einer entlang des Grenzbereichs oder senkrecht zum Grenzbereich laufenden Symmetrielinie in das jeweilige Paar eingetragen worden ist.

Die der Erfindung zugrundeliegende Aufgabe wird ferner gelöst durch eine rotierende elektrische Maschine, umfassend ein erfindungsgemäßes erstes Aktivteil und ein, insbesondere erfindungsgemäßes, zweites Aktivteil, wobei die elektrische Maschine zum Antreiben eines Fahrzeugs eingerichtet ist. Das Fahrzeug kann ein Hybridfahrzeug oder ein batterieelektrisches Fahrzeug sein.

Sämtliche Ausführungen zum erfindungsgemäßen Verfahren lassen sich analog auf das erfindungsgemäße Aktivteil und die erfindungsgemäße rotierende elektrische Maschine übertragen, sodass auch mit diesen die zuvor beschriebenen Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels des erfindungs-gemäßen Aktivteils;
- Fig. 2: eine Detailansicht zweier Formleiter im Bereich ihrer freien Enden gemäß dem ersten Ausführungsbeispiel;
- Fig. 3: eine stirnseitige Ansicht der Endflächen eines der Paare;
- Fig. 4 bis 9: jeweils eine stirnseitige Ansicht der Endflächen eines der Paare gemäß einem weiteren Ausführungsbeispiel; und
- Fig. 10: eine Prinzipskizze eines Fahrzeugs mit einem Ausführungsbeispiel der erfindungsgemäßen elektrischen Maschine.

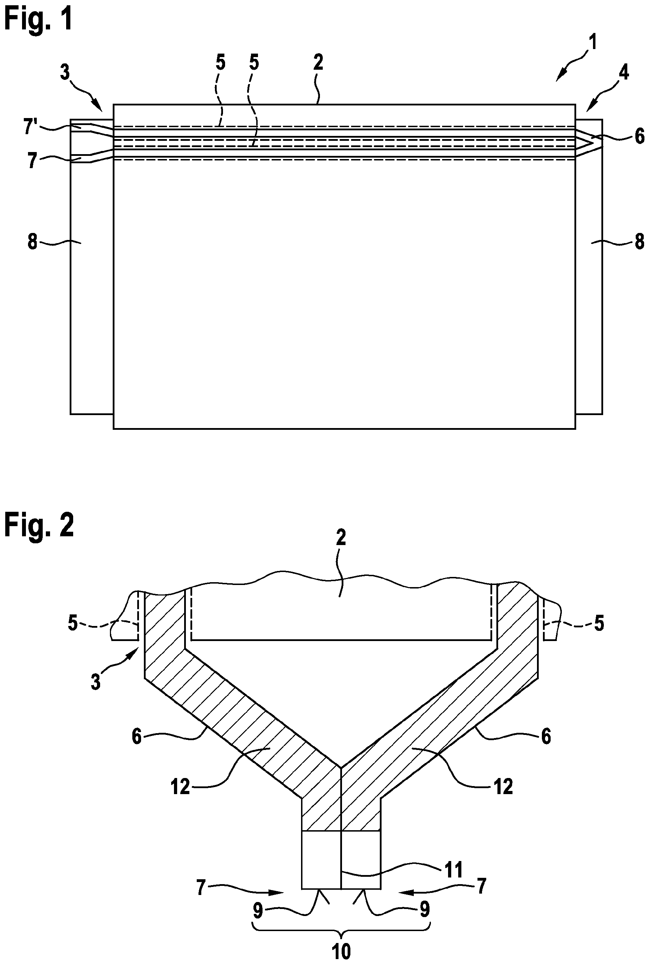

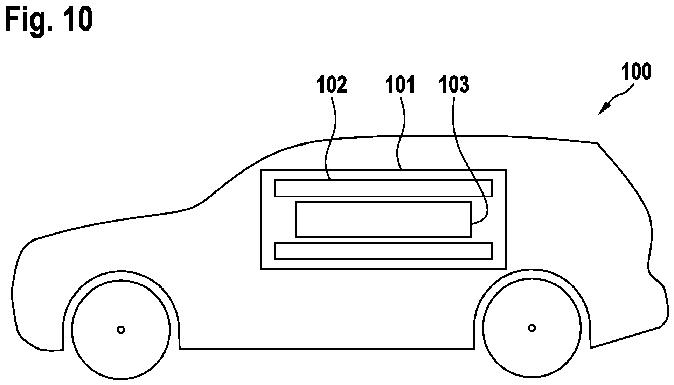

Fig. 1 ist eine Prinzipskizze eines ersten Ausführungsbeispiels eines Aktivteils 1 für eine rotierende elektrische Maschine 101 (vgl. Fig. 10).

Das Aktivteil 1 umfasst einen Kern 2, der in allgemein bekannter Weise aus einer Vielzahl geschichteter gegeneinander elektrisch isolierter Einzelbleche (nicht gezeigt) gebildet sein und in diesem Fall auch als Blechpaket aufgefasst werden kann. Der Kern 2 weist eine Stirnseite 3 und eine der Stirnseite 3 gegenüberliegende weitere Stirnseite 4 auf. Im Kern 2 sind ferner mehrere in Umfangsrichtung angeordnete Nuten 5 ausgebildet, die sich von der Stirnseite 3 zur weiteren Stirnseite 4 in axialer Richtung erstreckenden und den Kern 2 vollständig axial durchsetzen. In Fig. 1 sind lediglich zwei der Nuten 5 rein schematisch dargestellt.

Das Aktivteil 1 umfasst ferner mehrere in den Kern 2 eingesetzte Formleiter 6, von denen in Fig. 1 lediglich ein einziger dargestellt ist. Die Formleiter 6 erstrecken sich von der Stirnseite 3 zur weiteren Stirnseite 4 und weisen jeweils ein freies Ende 7 auf. Im vorliegenden Ausführungsbeispiel ist der Formleiter 6 exemplarisch aus Kupfer und durch einen mehrfach gebogenen Draht ausgebildet. Der Formleiter 6 erstreckt sich dabei vom freien Ende 7 an der Stirnseite 3 in axialer Richtung zur weiteren Stirnseite 4, weist an der weiteren Stirnseite 4 eine 180-Grad-Biegung auf und erstreckt sich zurück von der weiteren Stirnseite 4 durch eine andere Nut 5 zur Stirnseite 3. An der Stirnseite 3 weist der Formleiter 6 ein weiteres freies Ende 7' auf. Der Formleiter 6 hat dementsprechend eine U-Form oder V-Form und kann auch als Leitersegment einer Haarnadelwicklung (englisch hair pin winding) aufgefasst werden. An beiden Stirnseiten 3, 4 bilden die Formleiter rein schematisch dargestellte Wickelköpfe 8 aus.

Fig. 2 ist eine Detailansicht zweier Formleiter 6 im Bereich ihrer freien Enden 7 gemäß dem ersten Ausführungsbeispiel.

Ersichtlich ragen die Formleiter 6 aus dem Kern 2 an dessen Stirnseite 3 heraus. Die freien Enden 7 weisen jeweils eine Endfläche 9 auf, die sich im Wesentlichen senkrecht zur Axialrichtung bzw. senkrecht zur Erstreckungsrichtung der Formleiter erstreckt. Zum Ausbilden des Paares 10 sind die Endflächen 9 zusammengefügt. Ein Spalt zwischen den Endflächen 9 oder eine Berührung der Endflächen 9 bildet dabei einen Grenzbereich 11 aus.

Jedes Paar 10 der Endflächen 9 ist mittels eines Laserstrahls miteinander verschweißt, sodass die freien Enden 7 bzw. die Formleiter 6 elektrisch leitfähig und mechanisch miteinander verbunden sind. Durch das Verschweißen wird oder werden ein oder mehrere Strompfade ausgebildet, die dazu eingerichtet sind, bei einer Bestromung ein magnetisches Feld zur Erzeugung einer elektromotorischen Kraft der rotierenden elektrischen Maschine 101 (siehe Fig. 10) zu erzeugen.

Fig. 2 zeigt ferner schematisch durch eine Schraffur eine äußere elektrisch isolierende Oberflächenschicht 12 der Formleiter 6. Die Oberflächenschicht 12 umgibt ein elektrisch leitfähiges Material der Formleiter 6. Lediglich an den freien Enden 7, 7' liegt das elektrisch leitfähige Material frei, sodass die Oberflächenschicht 12 durch den thermischen Energieeintrag des Laserstrahls nicht beschädigt wird.

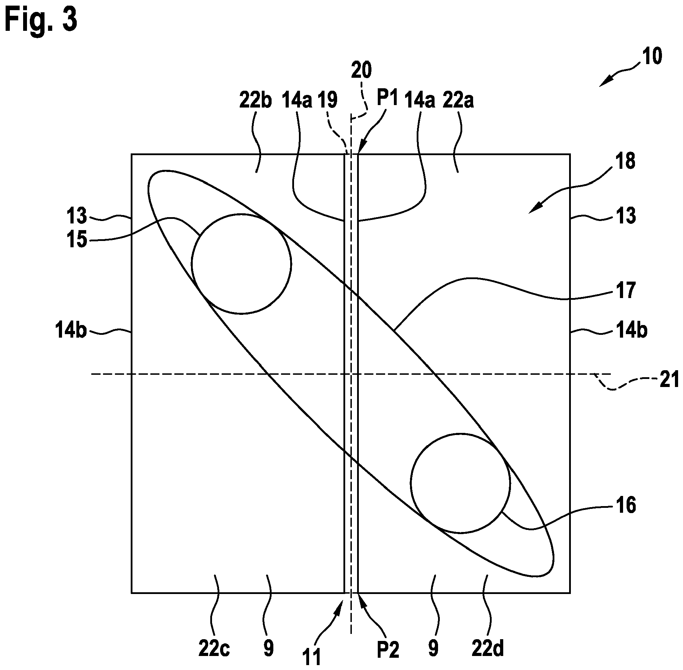

Fig. 3 ist eine stirnseitige Ansicht der Endflächen 9 eines der Paare 10 gemäß dem ersten Ausführungsbeispiel.

Wie aus Fig. 3 ersichtlich ist, besteht ein Rand 13 der Endfläche 9 eines jeweiligen Formleiters 6 aus einem inneren Randabschnitt 14a und einem äußeren Randabschnitt 14b. Anfang und Ende des inneren Randabschnitts 14a sind in Fig. 3 mit Pfeilen P1, P2 markiert. Der innere Randabschnitt 14a der Endfläche 9 eines Formleiters 6 eines jeweiligen Paars 10 verläuft entlang des inneren Randabschnitts 14a der Endfläche 9 des anderen Formleiters 6 des Paars 10. Zwischen den inneren Randabschnitten 14a verläuft der Grenzbereich 11.

Das Paar 10 ist mittels eines Laserstrahls verschweißt, der entlang eines eine erste Trajektorie 15, eine zweite Trajektorie 16 und eine dritte Trajektorie 17 aufweisenden Musters über eine Fläche 18 geführt worden ist. Auf einem Rand 19 der Fläche 18 liegen die äußeren Randabschnitte 14b des Paars 10. Die Fläche 18 schließt auch den Grenzbereich 11 ein.

Eine Energie des Laserstrahls auf der Fläche 18 ist durch das Führen entlang des Musters asymmetrisch bezüglich einer entlang des Grenzbereichs laufenden Symmetrielinie 20 in das jeweilige Paar 10 eingetragen worden.

Die Trajektorien 10 sind im vorliegenden Ausführungsbeispiel jeweils geschlossene Trajektorien, wobei die erste Trajektorie 15 und die zweite Trajektorie 16 kreisförmig sind. Die dritte Trajektorie 17 ist oval oder elliptisch. Dadurch, dass, die erste Trajektorie 15 und die zweite Trajektorie 16 auf unterschiedlichen Seiten der Symmetrielinie 20 und auch auf unterschiedlichen Seiten einer die Symmetrielinie 20 mittig teilenden Linie 21 verlaufen, verläuft die zweite Trajektorie 15 asymmetrisch bezüglich der Symmetrielinie 20 zur ersten Trajektorie 16. Asymmetrisch bezüglich der Symmetrielinie 20 bezieht sich dabei auf eine fehlende Spiegelsymmetrie.

Die Symmetrielinie 20 und die Linie 21 teilen die Fläche in vier Quadranten 22a, 22b, 22c, 22d, die bei stirnseitiger Betrachtung des Paars 10 in ihrer Reihenfolge entgegen dem Uhrzeigersinn benannt sind. Die erste Trajektorie 15 liegt hier vollständig im zweiten Quadranten 22b. Die zweite Trajektorie 16 liegt vollständig im vierten Quadranten 22d.

Die dritte Trajektorie 17 umschließt im vorliegenden Ausführungsbeispiel die erste und zweite Trajektorie 15, 16 und berührt die erste und zweite Trajektorie 15, 16 dabei. Die dritte Trajektorie 17 erstreckt sich über alle vier Quadranten 22a-d und erstreckt sich diagonal über die erste und zweite Trajektorie 15, 16 hinaus.

Das Aktivteil 1 kann als Stator 102 oder als Rotor 103 ausgebildet sein (vgl. Fig. 10).

Im Folgenden werden weitere Ausführungsbeispiele des Aktivteils 1 beschrieben. Dabei sind gleiche oder gleichwertige Komponenten mit identischen Bezugszeichen versehen.

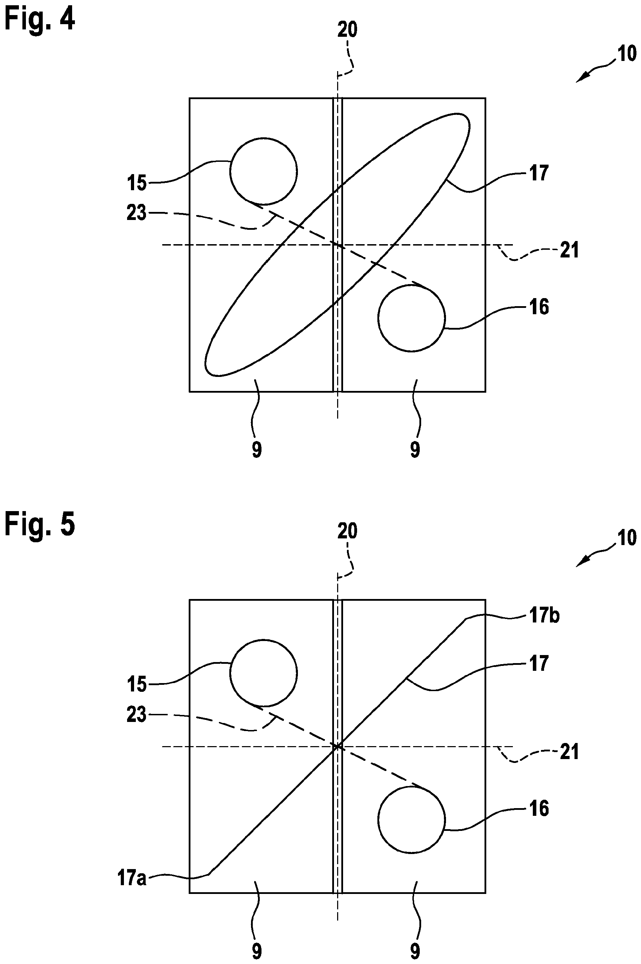

Fig. 4 ist eine stirnseitige Ansicht der Endflächen 9 eines der Paare 10 gemäß einem zweiten Ausführungsbeispiel des Aktivteils 1, auf das sich bis auf die im Folgenden beschriebenen Abweichungen alle Ausführungen zum ersten Ausführungsbeispiel übertragen lassen. Beim zweiten Ausführungsbeispiel verläuft die dritte Trajektorie 17 überschneidungsfrei zwischen der ersten Trajektorie 15 und der zweiten Trajektorie 16. Eine gedachte Verbindungslinie 23, welche die erste Trajektorie 15 und die zweite Trajektorie 16 verbindet, schneidet die dritte Trajektorie 17 zweimal.

Fig. 5 ist eine stirnseitige Ansicht der Endflächen 9 eines der Paare 10 gemäß einem dritten Ausführungsbeispiel des Aktivteils 1, auf das sich bis auf die im Folgenden beschriebenen Abweichungen alle Ausführungen zum zweiten Ausführungsbeispiel übertragen lassen. Beim dritten Ausführungsbeispiel weist die dritte Trajektorie 17 einen Anfangspunkt 17a und einen davon unterschiedlichen Endpunkt 17b auf, zwischen denen die dritte Trajektorie 17 gerade verläuft. Die Verbindungslinie 23 schneidet die dritte Trajektorie 17 lediglich einmal.

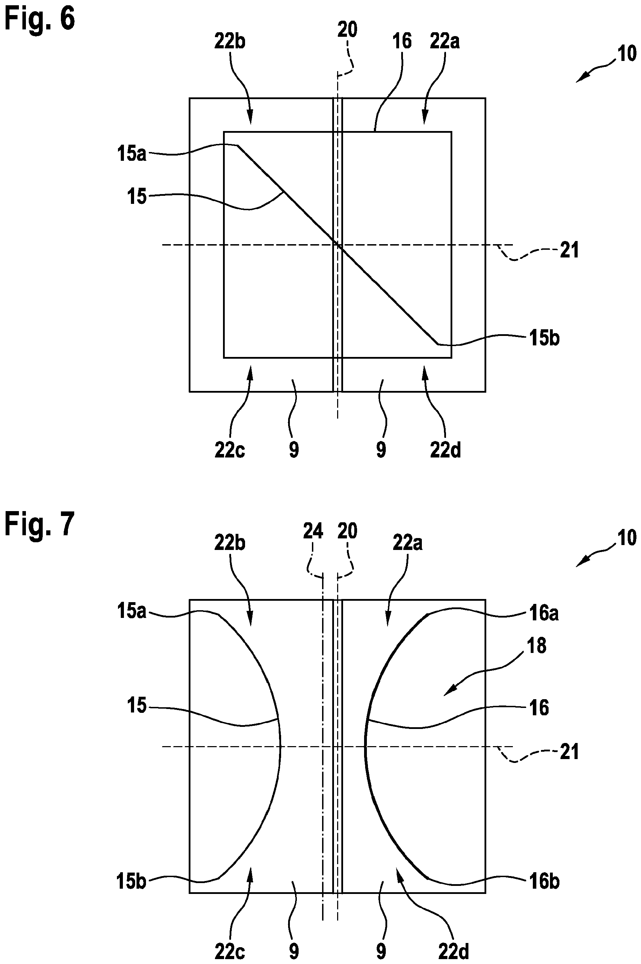

Fig. 6 ist eine stirnseitige Ansicht der Endflächen 9 eines der Paare 10 gemäß einem vierten Ausführungsbeispiel des Aktivteils 1, auf das sich bis auf die im Folgenden beschriebenen Abweichungen alle Ausführungen zum ersten Ausführungsbeispiel übertragen lassen.

Beim vierten Ausführungsbeispiel weist die erste Trajektorie 15 einen Anfangspunkt 15a und einen Endpunkt 15b auf, zwischen denen die erste Trajektorie gerade verläuft und die in nicht benachbarten Quadranten 22b, 22d liegen. Der Anfangspunkt 15a liegt im zweiten Quadranten 22b. Der Endpunkt liegt im vierten Quadranten 22d. Die erste Trajektorie 15 erstreckt sich durch den Schnittpunkt der Symmetrielinie 22 mit der Linie 21.

Gemäß dem vierten Ausführungsbeispiel ist die zweite Trajektorie 16 eine geschlossene Trajektorie, die rechteckig verläuft. Die zweite Trajektorie 16 verläuft sowohl spiegelsymmetrisch zur Symmetrielinie 20 als auch spiegelsymmetrisch zur Linie 21. Die erste Trajektorie 15 verläuft diagonal und überschneidungsfrei innerhalb der zweiten Trajektorie 16. Die zweite Trajektorie 16 schneidet die Symmetrielinie 20 und die Linie 21 jeweils zweimal.

Beim vierten Ausführungsbeispiel ist keine geschlossene dritte Trajektorie vorgesehen.

Fig. 7 ist eine stirnseitige Ansicht der Endflächen 9 eines der Paare 10 gemäß einem fünften Ausführungsbeispiel des Aktivteils 1, auf das sich bis auf die im Folgenden beschriebenen Abweichungen alle Ausführungen zum ersten Ausführungsbeispiel übertragen lassen.

Beim fünften Ausführungsbeispiel weisen sowohl die erste Trajektorie 15 als auch die zweite Trajektorie 16 jeweils einen Anfangspunkt 15a, 16a und einen davon unterschiedlichen Endpunkt 15b, 16b auf und beschreiben eine gewölbte Kurve, beispielsweise einen Kreisbogen, einen Ellipsenbogen, eine Parabel oder eine Hyperbel, auf der Fläche 18. Die erste Trajektorie 15 und die zweite Trajektorie 16 verlaufen auf unterschiedlichen Seiten der Symmetrielinie 20 und schneiden jeweils die Linie 21. Die erste Trajektorie 15 liegt im zweiten und dritten Quadranten 22b, 22c. Die zweite Trajektorie 16 liegt im ersten und vierten Quadranten 22a, 22d.

Die erste und die zweite Trajektorie 15, 16 sind derart verlaufen derart asymmetrisch bezüglich der Symmetrielinie 20, dass sie spiegelsymmetrisch bezüglich einer gegenüber der Symmetrielinie 20 parallelverschobenen Linie 24 verlaufen. Darüber hinaus ist die Energieintensität des Laserstrahls entlang der ersten Trajektorie 15 kleiner als entlang der zweiten Trajektorie 16. So kann trotz gleicher Strecke der Trajektorien 15, 16 der asymmetrische Energieeintrag bezüglich der Symmetrielinie 20 erfolgen. Die größere Energieintensität ist durch eine höhere Strichstärke bei der Trajektorie 16 dargestellt.

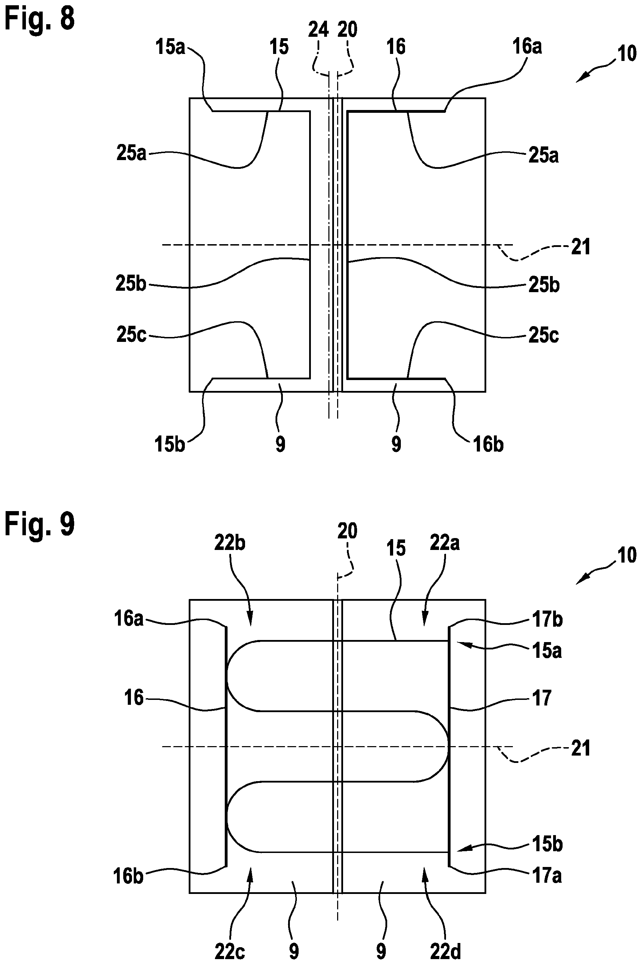

Fig. 8 ist eine stirnseitige Ansicht der Endflächen 9 eines der Paare 10 gemäß einem sechsten Ausführungsbeispiel des Aktivteils 1, auf das sich bis auf die im Folgenden beschriebenen Abweichungen alle Ausführungen zum fünften Ausführungsbeispiel übertragen lassen. Beim sechsten Ausführungsbeispiel bestehen die erste und zweite Trajektorie 15, 16 jeweils aus einem ersten geraden Abschnitt 25a, einem zweiten geraden Abschnitt 25b und einem dritten geraden Abschnitt 25c. Der erste gerade Abschnitt 25a erstreckt sich vom Anfangspunkt 15a, 16a aus. Der dritte gerade Abschnitt 25c erstreckt sich zum Endpunkt 15b, 16b hin. Der zweite gerade Abschnitt 25b verbindet den ersten geraden Abschnitt 25a mit dem dritten geraden Abschnitt 25c verbindet. Der zweite gerade Abschnitt 25b schließt mit dem ersten geraden Abschnitt 25a und dem dritten geraden Abschnitt 25c jeweils einen rechten Winkel ein.

Fig. 9 ist eine stirnseitige Ansicht der Endflächen 9 eines der Paare 10 gemäß einem siebten Ausführungsbeispiel des Aktivteils 1, auf das sich bis auf die im Folgenden beschriebenen Abweichungen alle Ausführungen zum ersten Ausführungsbeispiel übertragen lassen.

Beim siebten Ausführungsbeispiel weist die erste Trajektorie 15 einen Anfangspunkt 15a und einen davon unterschiedlichen Endpunkt 15b auf und schneidet die Symmetrielinie 20 zwischen dem Anfangspunkt 15a und dem Endpunkt 15b viermal. Die erste Trajektorie 15 erstreckt sich mäanderförmig durch alle vier Quadranten 22a-d.

Die zweite Trajektorie 16 und die dritte Trajektorie 17 weisen jeweils einen Anfangspunkt 16a, 17a und einen davon unterschiedlichen Endpunkt 16b, 17b auf und verläuft dazwischen gerade. Die zweite und dritte Trajektorie 16, 17 verlaufen gerade auf unterschiedlichen Seiten der Symmetrielinie 20. Die Energieintensität des Laserstrahls entlang der ersten Trajektorie 15 ist kleiner als entlang der zweiten und dritten Trajektorie 16, 17.

Gemäß weiteren Ausführungsbeispielen wird der Laserstrahl entlang der Trajektorien 15-17 gemäß dem ersten bis vierten Ausführungsbeispiel mit unterschiedlichen Energieintensitäten geführt.

Gemäß weiteren Ausführungsbeispielen, die den zuvor beschriebenen entsprechen, schneidet die Symmetrielinie 20 den Grenzbereich 11 mittig. Die die Trajektorien 15-17 aufweisenden Muster entsprechen dann den um 90° gedrehten Mustern gemäß Fig. 3 bis Fig. 9.

Im Folgenden werden Ausführungsbeispiele eines Verfahrens zur Herstellung des Aktivteils 1 gemäß den vorangehenden Ausführungsbeispielen beschrieben:
Das Verfahren weist einen ersten Schritt des Bereitstellens des Kerns 2 und der in den Kern 2 eingesetzten Formleiter 6 auf. In einem anschließenden zweiten Schritt werden jeweils zwei Endflächen 9 aneinandergefügt, sodass die zwei Endflächen 9 ein Paar 10 bilden.

In einem anschließenden dritten Schritt wird ein jeweiliges Paar 10 mittels eines Laserstrahls verschweißt, der auf den Endflächen 9 des Paars entlang der Trajektorien 15-17 entsprechend einem der zuvor beschriebenen Ausführungsbeispiele geführt wird. Dabei wird eine den Laserstrahl erzeugende Laservorrichtung verwendet. Die Laservorrichtung ist in einem deaktivierten Zustand betreibbar, in welchem der Laserstrahl abgeschaltet ist oder eine für ein Aufschmelzen eines Materials der Formleiter 6 unzureichende Leistung aufweist. Die Laservorrichtung ist ferner in einem aktivierten Zustand betreibbar, in welchem der Laserstrahl das Material des Formleiters 6 aufschmelzen kann. Im aktivierten Zustand ist die Energieintensität des Laserstrahls veränderbar.

Der dritte Schritt des Verschweißens umfasst ferner folgende Schritte für eine jeweilige Trajektorie 15-17: Ausrichten der Laservorrichtung auf den Anfangspunkt 15a-17a der Trajektorie 15-17 im deaktivierten Zustand; und Führen des Laserstrahls im aktivierten Zustand der Laservorrichtung vom Anfangspunkt 15a-17a entlang der Trajektorie 15-17 zum Endpunkt der Trajektorie 15b-17b. Dabei wird die Laservorrichtung zwischen dem Ausrichten und dem Führen aus dem deaktivierten Zustand in den aktivierten Zustand überführt, wenn die Laservorrichtung auf den Anfangspunkt 15a-17a der Trajektorie 15-17 ausgerichtet ist, und aus dem aktivierten Zustand in den deaktivierten Zustand überführt, wenn das Führen den Endpunkt 15b-17b der Trajektorie 15-17 erreicht hat. Obwohl dies in den Ausführungsbeispielen des Aktivteils 1 nicht dargestellt wurde, weisen die geschlossenen Trajektorien 15-17 selbstverständlich auch einen Anfangspunkt und einen Endpunkt, die identisch sind. Bei der geschlossenen Trajektorie können der Anfangspunkt und der Endpunkt auch unterschiedlich sein, sodass sich die Trajektorie selbst überlappt.

Es ist zu beachten, dass das durch Durchführung des Verfahrens erhaltene Aktivteil 1 - je nach Parametrierung des Schweißvorgangs - nicht zwingend Schweißnähte in Form der Trajektorien 15-17 aufweisen muss.

Fig. 10 ist eine Prinzipskizze eines Fahrzeugs 100 mit einem Ausführungsbeispiel einer rotierenden elektrischen Maschine 101.

Die elektrische Maschine 101 weist einen Stator 102 und einen Rotor 103 auf. Der Stator 102 und/oder der Rotor 103 sind als Aktivteil 1 gemäß einem der zuvor beschriebenen Ausführungsbeispiele ausgebildet oder durch eines der zuvor beschriebenen Ausführungsbeispiele des Verfahrens erhalten.

Die elektrische Maschine 101 ist zum Antreiben des Fahrzeugs 100 eingerichtet. Das Fahrzeug 100 ist dementsprechend ein batterieelektrisches Fahrzeug (BEV) oder ein Hybridfahrzeug.

## Patentansprüche

1. Verfahren zur Herstellung eines Aktivteils (1) für eine rotierende elektrische Maschine (101), umfassend folgende Schritte:
- Bereitstellen eines Kerns (2) für das Aktivteil (1) und in den Kern (2) eingesetzter Formleiter (6), wobei der Kern (2) eine Stirnseite (3), eine der Stirnseite (3) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und eine Endfläche (9) aufweist;
- Aneinanderfügen von jeweils zwei der Endflächen (9), sodass die zwei Endflächen (9) ein Paar (10) bilden, wobei ein Rand (13) der Endfläche (9) eines jeweiligen Formleiters (6) aus einem inneren Randabschnitt (14a) und einem äußeren Randabschnitt (14b) besteht, wobei der innere Randabschnitt (14a) der Endfläche (9) eines Formleiters (6) eines jeweiligen Paars (10) entlang des inneren Randabschnitts (14a) der Endfläche des anderen Formleiters des Paars (10) verläuft und zwischen den inneren Randabschnitten (14a) ein Grenzbereich (11) verläuft; und
- Verschweißen eines jeweiligen Paars (10) der Endflächen (9) mittels eines Laserstrahls, der entlang eines eine Trajektorie (15) aufweisenden Musters über eine Fläche (18) geführt wird, auf deren Rand (19) die äußeren Randabschnitte (14b) liegen und die den Grenzbereich (11) einschließt;
**dadurch gekennzeichnet, dass**
eine Energie des Laserstrahls auf der Fläche (18) durch das Führen entlang des Musters asymmetrisch bezüglich einer entlang des Grenzbereichs (11) oder senkrecht zum Grenzbereich (11) laufenden Symmetrielinie (20) in das jeweilige Paar (10) eingetragen wird.

2. Verfahren nach Anspruch 1, wobei
das Muster ferner eine zweite Trajektorie (16) aufweist.

3. Verfahren nach Anspruch 2, wobei
die zweite Trajektorie (16) asymmetrisch bezüglich der Symmetrielinie (20) zur ersten (15) Trajektorie verläuft.

4. Verfahren nach einem der Ansprüche 2 oder 3, wobei das Muster ferner eine dritte Trajektorie (17) aufweist, welche
- die erste und zweite Trajektorie (15, 16) umschließt oder
- überschneidungsfrei zwischen der ersten Trajektorie (15) und der zweiten Trajektorie (16) verläuft.

5. Verfahren nach Anspruch 4, wobei
die dritte Trajektorie (17)
- einen Anfangspunkt (17a) und einen Endpunkt (17b) aufweist und insbesondere gerade zwischen dem Anfangspunkt (17a) und dem Endpunkt (17b) verläuft oder
- eine geschlossene Trajektorie ist.

6. Verfahren nach einem der Ansprüche 2 bis 5, wobei
- die erste Trajektorie (15) geschlossen, insbesondere kreisförmig, oval oder rechteckig, verläuft und/oder
- die zweite Trajektorie (16) geschlossen, insbesondere kreisförmig, oval oder rechteckig, verläuft.

7. Verfahren nach einem der Ansprüche 2 bis 6, wobei
die erste Trajektorie (15) und die zweite Trajektorie (16) auf unterschiedlichen Seiten der Symmetrielinie (20) und insbesondere auf unterschiedlichen Seiten einer die Symmetrielinie (20) senkrecht, insbesondere mittig, teilenden Linie (21) verlaufen.

8. Verfahren nach Anspruch 6, wobei
die zweite Trajektorie (16) geschlossen über beiden Seiten der Symmetrielinie (20) verläuft und die erste Trajektorie (15), insbesondere diagonal, innerhalb der zweiten Trajektorie (16) verläuft und die Symmetrielinie (20) schneidet.

9. Verfahren nach einem der Ansprüche 2 bis 5, wobei
die erste Trajektorie (15) und die zweite Trajektorie (16) jeweils einen Anfangspunkt (15a, 16a) und einen davon unterschiedlichen Endpunkt (15b, 16b) aufweisen und insbesondere
- eine gewölbte Kurve, insbesondere einen Kreisbogen, einen Ellipsenbogen, eine Parabel oder eine Hyperbel, auf der Fläche (18) beschreiben oder
- einen ersten bis dritten geraden Abschnitt (25a-c) aufweisen oder daraus bestehen, wobei sich der erste gerade Abschnitt (25a) vom Anfangspunkt (15a, 16a) aus erstreckt, sich der dritte gerade Abschnitt (25c) zum Endpunkt (15b, 16b) hin erstreckt und der zweite gerade Abschnitt (25b) den ersten geraden Abschnitt (25a) mit dem dritten geraden Abschnitt (25c) verbindet.

10. Verfahren einem der Ansprüche 3 bis 5 oder nach Anspruch 9, wobei die erste Trajektorie (15) und die zweite Trajektorie (16) spiegelsymmetrisch bezüglich einer gegenüber der Symmetrielinie (20) parallelverschobenen Linie (24) verlaufen.

11. Verfahren nach einem der Ansprüche 2 bis 10, wobei die Energieintensität des Laserstrahls entlang der ersten Trajektorie (15) größer oder kleiner als entlang der zweiten Trajektorie (16) ist.

12. Verfahren nach Anspruch 1 oder 2, wobei
die Trajektorie (15) einen Anfangspunkt (15a) und einen davon unterschiedlichen Endpunkt (15b) aufweist und die Symmetrielinie (20) zwischen dem Anfangspunkt (15a) und dem Endpunkt (15b) wenigstens zweimal, bevorzugt wenigstens viermal, schneidet.

13. Verfahren nach Anspruch 12, wenn abhängig von Anspruch 2, wobei die zweite Trajektorie (16) einen Anfangspunkt (16a) und einen davon unterschiedlichen Endpunkt (16b) aufweist und, insbesondere gerade, vollständig auf einer Seite der Symmetrielinie (20) verläuft, und das Muster insbesondere ferner eine dritten Trajektorie (17) aufweist, die einen Anfangspunkt (17a) und einen davon unterschiedlichen Endpunkt (17b) aufweist und, insbesondere gerade, vollständig auf der Seite der Symmetrielinie (20) verläuft, auf der die zweite Trajektorie (16) nicht verläuft.

14. Verfahren nach einem der vorhergehenden Ansprüche, wobei das Aktivteil (1) ein Stator (102) oder ein Rotor (103) der rotierenden elektrischen Maschine (101) ist.

15. Aktivteil (1) für eine rotierende elektrische Maschine (101), erhalten durch ein Verfahren nach einem der vorhergehenden Ansprüche, und/oder umfassend: einen Kern (2) und in den Kern (2) eingesetzte Formleiter (6), wobei der Kern (2) eine Stirnseite (3), eine der Stirnseite (3) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und eine Endfläche (9) aufweist, wobei jeweils zwei der Endflächen (9) aneinandergefügt sind, sodass die zwei Endflächen (9) ein Paar (10) bilden, wobei ein Rand (13) der Endfläche (9) eines jeweiligen Formleiters (6) aus einem inneren Randabschnitt (14a) und einem äußeren Randabschnitt (14b) besteht, wobei der innere Randabschnitt (14a) der Endfläche (9) eines Formleiters (6) eines jeweiligen Paars (10) entlang des inneren Randabschnitts (14a) der Endfläche (9) des anderen Formleiters (6) des Paars (10) verläuft und zwischen den inneren Randabschnitten (14a) ein Grenzbereich (11) verläuft, wobei ein jeweiliges Paar (10) der Endflächen (9) mittels eines entlang eines eine Trajektorie (15) aufweisenden Musters über eine Fläche (18), auf deren Rand (19) die äußeren Randabschnitte (14b) liegen und die den Grenzbereich (11) einschließt, geführten Laserstrahls verschweißt ist, wobei eine Energie des Laserstrahls auf der Fläche (18) durch das Führen entlang des Musters asymmetrisch bezüglich einer entlang des Grenzbereichs (11) oder senkrecht zum Grenzbereich (11) laufenden Symmetrielinie (20) in das jeweilige Paar (10) eingetragen worden ist.
